(19)

Europäisches Patentamt
European Patent Office
Office européen des brevets

(11) **EP 4 508 983 A1**

(12) **EUROPEAN PATENT APPLICATION**
published in accordance with Art. 153(4) EPC

(43) Date of publication:
**19.02.2025  Bulletin 2025/08**

(21) Application number: **22937564.7**

(22) Date of filing: **14.09.2022**

(51) International Patent Classification (IPC):
*A23B 7/10* (2006.01)   *A23L 3/015* (2006.01)
*A23B 7/148* (2006.01)   *A23B 7/155* (2006.01)
*A23L 19/20* (2016.01)   *A23L 27/10* (2016.01)
*A23L 27/40* (2016.01)   *A23B 7/04* (2006.01)

(52) Cooperative Patent Classification (CPC):
**A23B 2/10; A23B 2/82; A23B 7/04; A23B 7/10;
A23B 7/148; A23B 7/155; A23L 2/38; A23L 19/20;
A23L 27/10; A23L 27/40; A23L 29/00; B65B 55/12**

(86) International application number:
**PCT/KR2022/013688**

(87) International publication number:
**WO 2023/200051 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2022  KR 20220046232
07.09.2022  KR 20220113217**

(71) Applicant: **Steven Food Tech Co., Ltd.
Seoul 06015 (KR)**

(72) Inventor: **PARK, Yun Kyung
Icheon-si, Gyeonggi-do 17394 (KR)**

(74) Representative: **Plasseraud IP
104 Rue de Richelieu
CS92104
75080 Paris Cedex 02 (FR)**

(54) **KIMCHI AND METHOD FOR PRODUCING SAME**

(57)    The present invention activates lactobacillus and by-products thereof, which influence the refreshing feeling and sweet taste of kimchi, and inhibits lactobacillus, general bacteria, yeast, mold, or by-products thereof, etc. which can cause repulsion, for example with the unique sourness of kimchi, thus greatly improving the taste and flavour of kimchi, and markedly enhancing the value of kimchi as a health food product. In addition, the present invention minimizes the swelling of packaging resulting from gas generated by the fermentation of kimchi during distribution, and thus provides quality-assured kimchi and a production method for same.

Fig 1.

(Seasoning sauce)

EP 4 508 983 A1

## Description

**[Technical Field]**

The present invention relates to kimchi and a method for preparing the same, and more specifically, to kimchi and a method for preparing the same, which activates lactobacillus and by-products thereof, which may enhance the sweet taste, refreshing feeling and the like of kimchi, and inhibits general bacteria, mold, yeast, etc., and by-products thereof, which may hinder consumers' preferences, such as the unique sourness, etc., of kimchi, thus greatly improving the taste and flavor of kimchi, and markedly enhancing the value of kimchi as a health food product and consumers' preferences, while preventing damage to packing materials, etc., due to deterioration of kimchi or gas generation during the processes of preparing and distributing kimchi.

**[Background Art]**

Kimchi is prepared by mixing and fermenting various subsidiary ingredients and spices after preserving various vegetables in salt, and Kimchi achieves an important position in the diet of Koreans and has established itself as a global food product due to an increase in international exchanges and a spread of the Korean Wave. Such kimchi may be stored for a long period of time compared to raw vegetables, and thus has been used as an important side dish, especially in winter. There are various types of kimchi depending on regions, seasons, and main ingredients, and kimchi refers to vegetable-fermented foods and is not limited to specific kimchi ingredients such as cabbage and radish.

Kimchi's unique flavor and texture begin with the fermentation of enzymes in the cells of vegetables such as cabbage and radish, in which such fermentation depends on the fermentation bacteria, fermentation conditions, and fermentation degrees. At this time, sugar or amino acid generated by an enzyme action becomes food for various microorganisms on a material, and fermentation begins as these microorganisms grow.

Although research has been steadily conducted to improve the taste and flavor of kimchi through a method for preparing kimchi using fermentation as described above, there is a limit to regenerating kimchi into world-class food due to the following problems.

First, when kimchi is prepared through a conventional method for preparing kimchi, there is a problem in that fermentation of lactobacillus and general bacteria of kimchi may not be controlled, thus making it difficult to improve taste and flavor. In other words, the number of lactobacilli contained in kimchi and materials thereof before the start of making kimchi is about 10,000 per ml, whereas the number of lactobacilli rapidly increases to tens of millions when kimchi is ripened after preparing kimchi. As a result, as many as four to five billion lactobacilli and general bacteria are consumed together when eating a piece of kimchi with chopsticks, and the amount of lactobacilli, general bacteria, yeast, mold, and by-products thereof which cause a sense of repulsion such as the unique smell, etc., of kimchi among lactobacilli and general bacteria is excessively consumed, thus causing a decrease in general consumers' preference for kimchi.

Second, in order to overcome the above-described problems, a method for preparing kimchi, which is performed through a step of sterilizing kimchi at a high temperature after aging the kimchi, has been introduced, but there is also a limit to improving the taste and flavor of kimchi. In other words, the high-temperature sterilization has an effect of killing most of the lactobacilli of kimchi fermented after aging, and in this case, lactobacillus and by-products thereof, which exhibit the sweet taste and refreshing feeling of kimchi, are also killed among the lactic acid bacteria, thus causing a problem of causing the unique flavor of kimchi to be disappeared.

Third, there is a problem in which excessive gas is generated during the fermentation of kimchi. In other words, when kimchi is fermented during a kimchi preparation process or during a distribution process after the kimchi is prepared, excessive gas is generated, and a product having the kimchi packaged therein is swollen, thus failing to secure the safety of kimchi during distribution and accordingly causing the kimchi to be deteriorated. In addition, additional facilities or process steps are required to remove such gas, thus significantly decreasing the economic efficiency in terms of the processes of preparing and distributing kimchi.

Accordingly, the present inventors have conducted a research on a method for preparing kimchi and thus have completed kimchi, which activates lactobacillus and by-products thereof, which influence the refreshing feeling and sweet taste of kimchi, and inhibits lactobacillus, general bacteria, yeast, mold, and by-products thereof, etc. which can cause repulsion, for example with the unique sourness of kimchi, while greatly improving the taste and flavor of quality-assured kimchi during a distribution process, so as to markedly enhance the value of kimchi as a health food product.

**[Disclosure]**

**[Technical Problem]**

An object of the present invention, which is applied in order to solve the aforementioned problems of the prior art, is to provide kimchi and a method for preparing the same, which activates lactobacillus and by-products thereof, which influence the refreshing feeling and sweet taste of kimchi, and inhibits lactobacillus, general bacteria, yeast, mold, and by-products thereof, which may cause repulsion, for example with the unique sourness of kimchi, while minimizing the swelling through the minimized gas generation so as to secure the quality of kimchi, and greatly improving the taste and flavor of kimchi, so as to markedly enhance the value of kimchi as a health food product.

To solve the above-described object, the present invention may provide a method for preparing kimchi, which includes a first step of preparing kimchi and a second step of sterilizing the prepared kimchi at an ultra-high pressure.

In addition, according to one embodiment of the present invention, the method may further include a step of presterilizing and packing before the second step.

Furthermore, the second step may be a step of sterilizing at least once at an ultra-high pressure of 3500 to 6500 bar.

Moreover, the second step may be a step of sterilizing for one to ten minutes.

Besides, the present invention may provide a packaged kimchi having a value of 0.1 to 10 calculated according to Equation 1 below.

Number of general bacteria contained in 25 g of kimchi

Number of lactobacilli contained in 25 g of kimchi

In addition, according to one embodiment of the present invention, in the packaged kimchi, the number of yeasts measured according to measurement method 1 below may be less than 500.

[Measurement Method 1]

After sampling 25 g of packaged kimchi, 250 mL of sterilized physiological saline solution is added and diluted 10-fold, and then homogenized using a stomacher. Then, after diluting the resulting 10-fold dilution again with 10-fold water, 0.1 mL of the dilution is inoculated into three smears of Nutrient agar (NA), which is a bacterial medium, MRS agar, which is a lactobacillus medium, and Potato Dextrose agar (PDA), which is a fungal culture medium, respectively, and NA and MRS media are cultured at 35°C for one to two days and PDA for five days. After incubation, colonies formed on the medium are counted to obtain an average value, and the average value is multiplied by a dilution fold to measure a bacterial count of kimchi and the number of lactobacilli, yeasts, and molds.

Furthermore, in the packaged kimchi, the number of general bacteria measured according to above measurement method 1 may be less than $1 \times 10^6$.

Moreover, in the packaged kimchi, the number of molds measured according to above measurement method 1 may be less than $5 \times 10$.

[Advantageous Effects]

The present invention activates lactobacillus and by-products thereof, which influence the refreshing feeling and sweet taste of kimchi, and inhibits lactobacillus, general bacteria, yeast, mold, or by-products thereof, which can cause repulsion, for example with the unique sourness of kimchi, thus greatly improving the taste and flavor of kimchi, and markedly enhancing the value of kimchi as a health food product.

In addition, the present invention may minimize the swelling of packing materials resulting from gas generated by the fermentation of kimchi during distribution, and thus may provide quality-assured kimchi and the method for preparing the same.

[Description of Drawings]

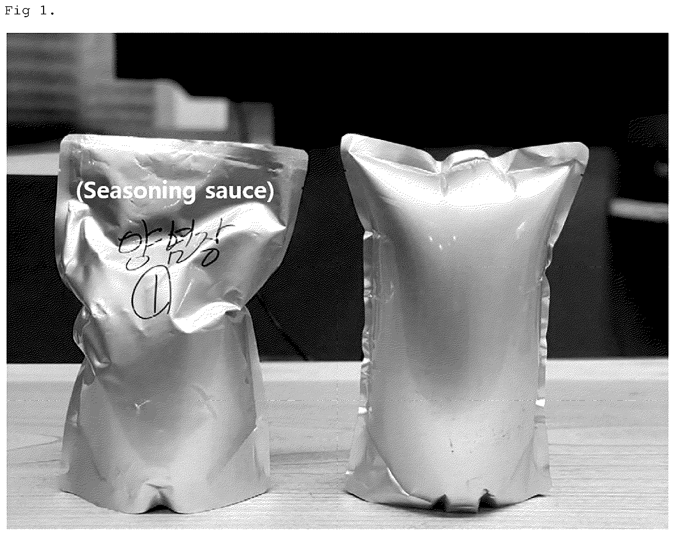

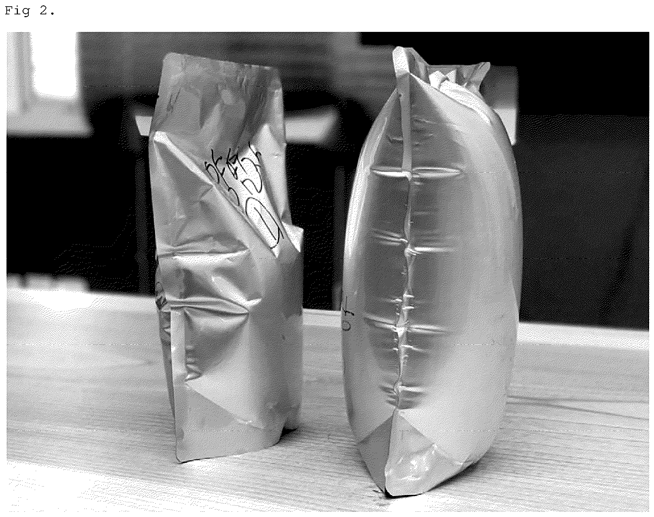

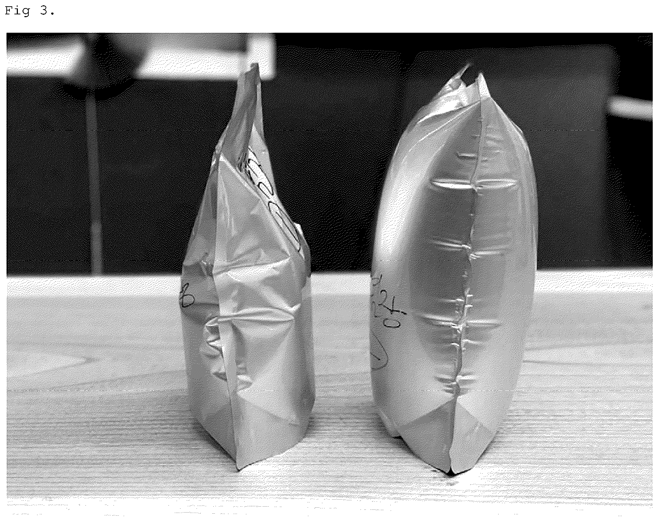

FIGS. 1 to 3 are pictures comparing kimchi (left side) prepared according to the present invention with kimchi (right side) prepared according to the conventional preparation method in order to show a state in which gas is not generated.

[Best Mode for Invention]

Hereinafter, embodiments of the present invention will be described in more detail such that those skilled in the art to which the present invention pertains may easily practice the present invention. The present invention may be implemented in various different forms, and is not limited to the embodiments described herein.

According to the conventional kimchi and the method for preparing the same as described above, the number of lactobacilli and the number of general bacteria may not be controlled, thus reducing the general public's preference for kimchi. Alternatively, even if the number of lactobacilli and the number of general bacteria are controlled, lactobacilli which may exhibit a sweet taste and refreshing feeling are also killed, and thus there is a limit to improving the taste and flavor of kimchi. In addition, there is a problem in that the generation of gas resulting from the fermentation of kimchi may not be controlled during the preparation and distribution of kimchi, thus failing to prevent the swelling of the product and the deterioration of the taste.

Accordingly, the present invention has been made in an effort to solve the aforementioned problems by providing a method for preparing kimchi, which includes a first step of preparing kimchi and a second step of sterilizing the prepared kimchi at an ultra-high pressure.

Thus, the present invention may activate lactobacillus and by-products thereof, which influence the refreshing feeling and sweet taste of kimchi, and inhibit lactobacillus, general bacteria, yeast, mold, or by-products thereof, etc. which cause repulsion, for example with the unique sourness of kimchi, thus greatly improving the taste and flavor of kimchi, and markedly enhancing the value of kimchi as a health food product. In addition, the present invention may minimize the swelling of packing materials resulting from gas generated by the fermentation of kimchi during distribution, and thus may provide quality-assured kimchi and the method for preparing the same.

Hereinafter, the method for preparing kimchi according to the present invention will be described.

The term "general bacteria" described in the present invention may mean E. coli, pathogenic microorganisms (Bacillus cereus, Clostridium perfringens, Staphylococcus aureus, Enterohemorrhagic Escherichia coli, Campylobacter jejuni/coli, Yersinia enterocolitica, Salmonella spp., Vibrio parahaemolyticus, Listeria monocytogenes), or the like.

The first step of preparing kimchi according to the present invention may be a step of salting the kimchi.

With regard to Kimchi according to the present invention, kimchi prepared using conventional raw materials of kimchi may be used. In other words, an object of the present invention is to control the number of lactobacilli and the number of general bacteria so as to improve the taste and flavor of kimchi and to prevent the deterioration during a distribution process, and thus a known conventional method for preparing kimchi may be used as long as the object of the present invention is satisfied.

For example, the first step according to the present invention may include a cutting step, a salting step, a washing step, a kimchi seasoning preparing step, a kimchi preparing step, a metal detecting step, and the like.

The cutting step may be a step of cutting the cabbage used for preparing kimchi into a preset size. For example, the cabbage may be bisected, trisected, or quadrisected in a longitudinal direction.

In the salting step, the cabbage cut in the cutting step may be preserved in salt for two to seven hours by immersing the cabbage in brine in which 100 parts by weight of water is mixed with normal salts, for example, 1 to 7 parts by weight of salt, and in this case, the cabbage may be immersed in the brine while a temperature of the brine is maintained at 10 to 35°C.

In the washing step, the cabbage preserved in brine may be removed from a salting tank and then put into a washer for washing. If necessary, the cabbage may be washed by putting the same into a high-pressure washer once or multiple times.

The kimchi seasoning preparing step may be a step of mixing seasoning materials such as radish, red pepper powder, anchovy, head of dried pollack, onion, purified water, garlic, fermented anchovy sauce, white sugar, green onion, salt, ginger, onion, salted shrimp (pickled shrimp), wheat powder, purified water, starch syrup and the like. In this case, a mixing ratio of the seasoning materials may be appropriately selected as long as it meets the object of the present invention and is not particularly limited.

The kimchi preparing step may be a step of preparing kimchi by dehydrating the cabbage washed in the washing step and adding the kimchi seasoning prepared in the kimchi seasoning preparing step into the cabbage. For example, kimchi seasoning may be automatically filled into an inside of the cabbage by using a stuffing device, or workers may manually fill the inside of the cabbage with the kimchi seasoning.

The metal detecting step may be a step of inputting the kimchi prepared in the kimchi preparing step into a metal detector so as to detect a metal material. For example, when the kimchi is passed and a metal material is not detected outside a preset metal detection range, it may be determined that there is no metallic component in the kimchi.

As described above, the first step of preparing kimchi according to the present invention may be performed by the above-described preparation method, but this is only a general method for preparing kimchi and is not limited thereto, and a method for preparing kimchi through various steps may be added.

Then, the second step of preparing kimchi according to the present invention may be a step of sterilizing the prepared kimchi at an ultra-high pressure.

In general, when kimchi is prepared through a conventional method for preparing kimchi, there is a problem in that fermentation of proliferating general bacteria and lactobacilli present in kimchi may not be controlled, thus making it difficult to improve taste and flavor. In other words, the number of lactobacilli contained in kimchi and materials thereof before the start of making kimchi may be about 10,000 per ml, whereas the number of lactobacilli may rapidly increase to tens of millions when kimchi is ripened after preparing kimchi. As a result, as many as hundreds of millions of general bacteria and lactobacilli are consumed together when eating a piece of kimchi with chopsticks, and the amount of general bacteria or lactobacillus and by-products thereof which cause a sense of repulsion such as the unique smell, etc., of kimchi is excessively consumed, thus causing a decrease in general consumers' preference for kimchi.

In addition, the prepared kimchi need to undergo transport and distribution processes until the same is delivered to a consumer, but the time required for this case is not constant, and thus general bacteria or lactobacilli may excessively proliferate, thus causing the taste and flavor of kimchi to deteriorate.

For this purpose, a method for sterilizing decomposed microorganisms, general bacteria, and the like by heating kimchi has been introduced, but in this case, it is not appropriate because the method may cause a severe change in the taste, aroma, and texture of kimchi, resulting in deterioration of sensory quality. In addition, in the case of adding preservatives or treating with radiation, it may be difficult to solve problems, such as the occurrence of off-taste/off-smell or residual toxicity caused by additives, the restriction of use according to related laws and regulations, and the rejection reaction of consumers, and the effect of using a pH adjuster, etc., may not be clearly verified.

Accordingly, in order to prevent the unexpected deterioration of kimchi during the distribution process and to ensure the taste and flavor of kimchi, the present invention may perform a second step of sterilizing bacteria causing the deterioration of kimchi including lactobacilli at a pressure of 2500 to 6500 bar, more preferably at a pressure of 3500 to 6200 bar, and most preferably at an ultra-high pressure of 4500 to 6200 bar.

In the present invention, ultra-high pressure sterilization may be a food processing technique which may be usefully applied to the sterilization or processing of food by inactivating specific ingredients, enzymes or microorganisms in kimchi, and in particular, there may be almost no change in thermochemical properties such as a loss of nutrients, generation of heated flavor, and generation of abnormal substances compared to a heat treatment process which is a conventional major food processing method, thus providing an advantage of maintaining the taste, aroma and color of food per se in nature.

In this case, if the ultra-high pressure sterilization pressure is less than 2500 bar, there may be a problem in that a desired amount of lactobacilli and general bacteria may not be sufficiently killed, and if the pressure exceeds 6500 bar, there may be a problem in that all beneficial bacteria which exhibit the flavor of kimchi due to excessively high pressure are killed.

In this case, the ultra-high pressure sterilization of the second step may be performed at least once or more.

A main object of the second step of the present invention may be to sterilize lactobacilli, general bacteria, yeast, mold, and the like which cause deterioration of the unique taste, aroma, smell, and the like of kimchi. However, even in the case of undergoing an ultra-high-pressure sterilization process, there may be a problem in that the storage and distribution period is prolonged due to the properties of fermented foods such as kimchi. In other words, when the number of ultra-high pressure sterilization is only once, the sterilization for lactobacilli, general bacteria, or decomposed microorganisms is not sufficient as desired, thus causing stability problems such as swelling of the packing materials due to the growth of general bacteria as well as deterioration of kimchi during storage and distribution.

Accordingly, the present invention may solve the above-described problems by performing the ultra-high pressure sterilization of the second step at least once for one to ten minutes.

Thus, the packaged kimchi prepared according to the present invention may have a value of 0.1 to 10 calculated according to Equation 1 below.

[Equation 1]

$$\frac{\text{Number of general bacteria contained in 25 g of kimchi}}{\text{Number of lactobacilli contained in 25 g of kimchi}}$$

In other words, the second step according to the present invention may greatly reduce the number of general bacteria included in kimchi, thereby achieving the above-described object, and in this case, when the value according to Equation 1 is less than 0.1, there may be a problem in that the packing material swells or the sour taste is increased due to excessive number of lactobacilli, and in addition, when the value according to Equation 1 exceeds 10, there may be a problem in that the amount of general bacteria is excessive, resulting in deterioration of taste and quality.

In addition, in the packaged kimchi prepared according to the present invention, the number of yeast may be less than 500, the number of general bacteria may be less than $1 \times 10^6$, and the number of fungi may be less than $5 \times 10$, which are measured according to measurement method 1 below. At this time, if the number of yeasts exceeds 500 or the number of molds exceeds 50, there may be a problem in that the packing materials swell in the distribution process or there is a change in the taste and quality of kimchi, which may adversely affect consumers' taste.

[Measurement Method 1]

After sampling 25 g of packaged kimchi, 250 mL of sterilized physiological saline solution is added and diluted 10-fold, and then homogenized using a stomacher. Then, after diluting the resulting 10-fold dilution again with 10-fold water, 0.1 mL of the dilution is inoculated into three smears of Nutrient agar (NA), which is a bacterial medium, MRS agar, which is a lactobacillus medium, and Potato Dextrose agar (PDA), which is a fungal culture medium, respectively, and NA and MRS media are cultured at 35°C for one to two days and PDA for five days. After incubation, colonies formed on the medium are counted to obtain an average value, and the average value is multiplied by a dilution fold to measure a bacterial count of kimchi and a number of lactobacilli, yeasts, and molds.

More specifically, referring to following Tables 1 and 2 and FIG. 1, in the case of Comparative Examples in which the second step of ultra-high pressure sterilization according to the present invention is not performed, it can be seen that the number of lactobacilli is increased by 1,000 times or more, and the number of general bacteria is increased by about 1,000 times compared to Examples. Furthermore, in an embodiment, yeast and mold which are not found may also be found, thus causing a problem in that the taste and flavor change during the distribution process, and due to the gas generated at this time, there may be a problem in that the packing materials in which kimchi is packaged swell as shown in FIG. 1.

In addition, when the ultra-high pressure sterilization is performed twice and three times, it can be seen that the number of general bacteria is remarkably reduced compared to when the ultra-high pressure sterilization is performed once, and it can be seen that a smaller number of bacteria remain when the ultra-high pressure sterilization is performed three times than when the ultra-high pressure sterilization is performed twice.

Meanwhile, it can be seen from Table 3 that when the second step of the ultra-high pressure sterilization according to the present invention is not performed, the taste and flavor of kimchi are deteriorated as well as stability and predictability in the distribution and storage process, thereby greatly affecting the sensory function of end consumers.

In this case, the ultra-high pressure sterilization may be performed for one to ten minutes under the pressure condition by a known general ultra-high pressure sterilization method which meets the object of the present invention and sterilizes general food and beverages, and according to one embodiment of the present invention, when a step of filling and packaging kimchi is performed before performing the second step after the first step, the filled and packaged kimchi may be sterilized at an ultra-high pressure.

Meanwhile, according to one embodiment of the present invention, a step of presterilizing and filling may be further performed before the second step.

In this case, as the sterilization method, a conventional sterilization method for killing general lactobacilli, general bacteria and the like known in the art may be used, and preferably, a sterilization method using UV may be used. In addition, the filling and packaging may be a step of individually packaging kimchi so that the kimchi may be easily delivered to a consumer, may be packaged by different weights, and may use a known general filling and packaging method of kimchi, and thus is not particularly limited.

Meanwhile, the present invention has been described while being divided into the first step and the second step for better understanding, but this is only one embodiment of the present invention and is not particularly limited as long as it conforms to the object of the present invention since it may include additional steps such as packaging, re-ripening, freezing, refrigerating, or thawing of kimchi before and after the step of sterilizing the kimchi at high pressure in the second step.

Hereinafter, the configuration and effects of the present invention will be described in more detail through specific examples. However, the scope of the present invention is not limited to the following examples, and those skilled in the art may easily change the configuration of the present invention within the scope of the technical spirit of the present invention by replacing or adding the configuration of the present invention from the contents described in the claims.

**[Mode for Invention]**

## Example 1

1 kg of whole cabbage kimchi (Narichan Whole Cabbage Kimchi, Narichan Agricultural Company Co., Ltd.) having a process drawing according to FIG. 4 was received, and an ultra-high-pressure sterilization step was performed using an ultra-high-pressure sterilizer under the conditions shown in Table 1 below.

**Examples 2 to 4**

Kimchi was prepared in the same manner as in above Example 1, but an ultra-high pressure sterilization step was performed under the conditions shown in Table 1 below.

**Comparative Examples 1 to 4**

Kimchi was prepared in the same manner as in above Example 1, except that ultra-high pressure sterilization was not performed.

[Table 1]

| Classification | Ultra-high pressure sterilization pressure (bar) | Ultra-high pressure sterilization number | | |
|---|---|---|---|---|
| | | Once | Twice | Three times |
| Example 1 | 5000/6000/5000 | 3 min | 3 min | 5 min |
| Example 2 | 5000/6000 | 3 min | 5 min | - |
| Example 3 | 3000/4000 | 3 min | 5 min | - |
| Example 4 | 5000 | 5 min | - | - |

**Experimental Example 1** - **Evaluation of microbiological properties of kimchi**

After sampling 25 g of packaged kimchi of above Examples and Comparative Examples, 250 mL of sterilized physiological saline solution was added and diluted 10-fold, and then homogenized using a stomacher. Then, after diluting the resulting 10-fold dilution again with 10-fold water, 0.1 mL of the dilution was inoculated into three smears of Nutrient agar (NA), which is a bacterial medium, MRS agar, which is a lactobacillus medium, and Potato Dextrose agar (PDA), which is a fungal culture medium, respectively, and NA and MRS media were cultured at 35°C for one to two days and PDA for five days. After incubation, colonies formed on the medium were counted to obtain an average value, and the average value is multiplied by a dilution fold to measure a bacterial count of kimchi and the number of lactobacilli, yeasts, and molds, which were shown in Table 2 below.

[Table 2]

| | General bacteria (number) | Lactobacilli (number) | Yeast (number) | Mold (number) |
|---|---|---|---|---|
| Example 1 | $2.7 \times 10^5$ | $4.4 \times 10^5$ | Undetected | Undetected |
| Example 2 | $5.5 \times 10^5$ | $8.8 \times 10^4$ | Undetected | Undetected |
| Example 3 | $6 \times 10^5$ | $3.2 \times 10^5$ | Undetected | Undetected |
| Example 4 | $9.2 \times 10^5$ | $8.8 \times 10^5$ | Undetected | Undetected |
| Comparative Example 1 | $2.2 \times 10^7$ | $1.2 \times 10^9$ | $4.4 \times 10^3$ | Undetected |
| Comparative Example 2 | $1.9 \times 10^8$ | $30 \times 10^8$ | $2.1 \times 10^3$ | Undetected |
| Comparative Example 3 | $1.1 \times 10^8$ | $2.6 \times 10^8$ | $6.6 \times 10^2$ | Undetected |
| Comparative Example 4 | $1.6 \times 10^8$ | $2 \times 10^8$ | Undetected | $6.3 \times 10$ |

Referring to following above Table 2, in the case of Comparative Examples in which the second step of ultra-high pressure sterilization according to the present invention is not performed, it can be seen that the number of lactobacilli is increased by 1,000 times or more, and the number of general bacteria is increased by about 1,000 times compared to Examples. Furthermore, in an embodiment, yeast and mold which are not found may also be found, thus causing a problem in that the taste and flavor change during the distribution process, and due to the gas generated at this time, there may be a problem in that the packing materials in which kimchi is packaged swell as shown in FIG. 1.

In addition, when the ultra-high pressure sterilization is performed twice and three times, it can be seen that the number of general bacteria is remarkably reduced compared to when the ultra-high pressure sterilization is performed once, and it can be seen that a smaller number of bacteria remain when the ultra-high pressure sterilization is performed three times than when the ultra-high pressure sterilization is performed twice.

**<Experimental Example 2> Sensory evaluation**

A sensory evaluation of the white kimchi juice prepared in above Examples and Comparative Examples was performed. The sensory evaluation was conducted on 50 sensory evaluation personnel who were familiar with food and beverage taste evaluation with a perfect score of 10 points. The higher the sweet taste, sour taste, astringent taste, smell like cabbage, and seasoning flavor, the higher the score was given, and the overall preference is shown in Table 3 as a score.

| | Taste | | | Smell | | Overall preference |
|---|---|---|---|---|---|---|
| | Sweet taste | Astringent taste | Sour taste | Smell like cabbage | Seasoning flavor | |
| Example 1 | 8.5 | 5.5 | 5.5 | 4.0 | 5.0 | 9.5 |
| Example 2 | 8.0 | 7.0 | 4.0 | 6.0 | 5.0 | 9.0 |
| Example 3 | 8.0 | 8.0 | 5.5 | 5.5 | 5.5 | 8.5 |
| Example 4 | 8.6 | 8.5 | 6.5 | 5.5 | 5.5 | 8.5 |
| Comparative Example 1 | 8.0 | 8.5 | 9.5 | 7.0 | 7.0 | 6.0 |
| Comparative Example 2 | 8.0 | 8.0 | 9.0 | 6.0 | 7.0 | 5.5 |
| Comparative Example 3 | 8.0 | 8.0 | 9.3 | 8.0 | 8.5 | 6.5 |
| Comparative Example 4 | 9.0 | 9.5 | 5.5 | 6.0 | 7.0 | 5.0 |

It can be seen from above Table 3 that when the second step of the ultra-high pressure sterilization according to the present invention is not performed, the taste and flavor of kimchi are deteriorated as well as stability and predictability in the distribution and storage process, thereby greatly affecting the sensory function of end consumers.

**Experimental Example 3** - **Evaluation of packing material of kimchi**

500 g of kimchi prepared in above Example 1 (left picture) and Comparative Example 1 (right picture) was sealed and packaged in a packing material (polyethylene pouch), and stored at 20°C for a quality maintenance period for five months, and pictures thereof were taken and shown in FIGS. 1 to 3.

In each of FIGS. 1 to 3, the right figure shows a picture of packaging the kimchi prepared according to the conventional method in the packing material, and it can be seen that gas is generated and the packing material swells.

On the contrary, as can be seen from the left figure of each of FIGS. 1 to 3, the present invention can remarkably reduce the gas generation by removing the gas-generating substances during the fermentation process of kimchi through the ultra-high pressure sterilization of the second step, and accordingly, it can be seen that the packing material does not swell excessively at room temperature.

Thus, the present invention does not require an additional process and facility due to gas generated during the processes of preparing and distributing kimchi, thereby improving the economic feasibility of the processes of preparing and distributing the kimchi, while preventing the deterioration of the taste or the like of the kimchi due to gas generation, thereby securing the taste and flavor of the kimchi.

**Claims**

1. A method for preparing kimchi, the method comprising:

   a first step of preparing kimchi; and
   a second step of sterilizing the prepared kimchi at an ultra-high pressure.

2. The method of claim 1, further comprising:
   a step of presterilizing and packing before the second step.

3. The method of claim 1, wherein the second step is a step of sterilizing at least once at an ultra-high pressure of 2500 to 6500 bar.

4. The method of claim 1, wherein the second step is a step of sterilizing for one to ten minutes.

5. A packaged kimchi having a value of 0.1 to 10 calculated according to Equation 1 below:

[Equation 1]

$$\frac{\text{Number of general bacteria contained in 25 g of kimchi}}{\text{Number of lactobacilli contained in 25 g of kimchi}}$$

6. The packaged kimchi of claim 5, wherein in the packaged kimchi, a number of yeasts measured according to measurement method 1 below is less than 500:
[Measurement Method 1]
wherein after sampling 25 g of packaged kimchi, 250 mL of sterilized physiological saline solution is added and diluted 10-fold, and then homogenized using a stomacher; then, after diluting the resulting 10-fold dilution again with 10-fold water, 0.1 mL of the dilution is inoculated into three smears of Nutrient agar (NA), which is a bacterial medium, MRS agar, which is a lactobacillus medium, and Potato Dextrose agar (PDA), which is a fungal culture medium, respectively, and NA and MRS media are cultured at 35°C for one to two days and PDA for five days; and after incubation, colonies formed on the medium are counted to obtain an average value, and the average value is multiplied by a dilution fold to measure a bacterial count of kimchi and a number of lactobacilli, yeasts, and molds.

7. The packaged kimchi of claim 6, wherein in the packaged kimchi, a number of general bacteria measured according to above measurement method 1 is less than $1 \times 10^6$.

8. The packaged kimchi of claim 6, wherein in the packaged kimchi, a number of molds measured according to above measurement method 1 is less than $5 \times 10$.

Fig 1.

Fig 2.

Fig 3.

| INTERNATIONAL SEARCH REPORT | International application No. |
| | **PCT/KR2022/013688** |

### A.     CLASSIFICATION OF SUBJECT MATTER

**A23B 7/10**(2006.01)i; **A23L 3/015**(2006.01)i; **A23B 7/148**(2006.01)i; **A23B 7/155**(2006.01)i; **A23L 19/20**(2016.01)i; **A23L 27/10**(2016.01)i; **A23L 27/40**(2016.01)i; **A23B 7/04**(2006.01)i

According to International Patent Classification (IPC) or to both national classification and IPC

### B.     FIELDS SEARCHED

Minimum documentation searched (classification system followed by classification symbols)

A23B 7/10(2006.01); A23L 19/20(2016.01); A23L 27/10(2016.01); A23L 3/015(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 김치(kimchi), 초고압(extra high pressure), 살균(sterilization), 저장(storage), 유산균(lactobacillus), 세균(germ)

### C.     DOCUMENTS CONSIDERED TO BE RELEVANT

| Category* | Citation of document, with indication, where appropriate, of the relevant passages | Relevant to claim No. |
|---|---|---|
| X | KR 10-0159678 B1 (CHEIL JEDANG CORPORATION) 16 November 1998 (1998-11-16)<br>See claim 1; example 1; and table 3. | 1-8 |
| X | KR 10-2019-0141729 A (XIHUA UNIVERSITY et al.) 24 December 2019 (2019-12-24)<br>See abstract; and claim 1. | 1-4 |
| X | 김종규 등. 김치의 숙성 및 발효중 오염지표미생물과 유산균의 변화-제1보. 한국환경보건학회지. 2005, vol. 31, no. 1, pp. 79-85 (KIM, Jong-Gyu et al. Changes of Index Microorganisms and Lactic Acid Bacteria of Korean Fermented Vegetables (Kimchi) during the Ripening and Fermentation-Part 1. Journal of Environmental Health Sciences.)<br>See pages 80-83, and table 2. | 5-8 |
| X | 김동원. 초고압 처리가 배추김치의 품질특성에 미치는 영향. 연세대학교 산업대학원 석사학위 논문. 2000, pp. i-vi and 1-40 (KIM, Dong Won. Effect of High Hydrostatic Pressure on the Quality of Chinese Cabbage Kimchi. thesis, Department of Biotechnology, Yonsei University Graduate School.)<br>See pages 9 and 12. | 1-4 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/013688** |

**C.    DOCUMENTS CONSIDERED TO BE RELEVANT**

| Category* | Citation of document, with indication, where appropriate, of the relevant passages | Relevant to claim No. |
| --- | --- | --- |
| | 이정현. 김치 양념의 미생물학적 안전성 향상 및 품질 유지를 위한 초고압 기반 허들 기술 개발. 충남대학교 대학원 석사학위논문. February 2021, pp. i-iv and 1-55 (LEE, Jeong Hyeon. Development of high hydrostatic pressure-based hurdle technology to improve the microbiological safety and maintain the quality of kimchi sauce. thesis, Graduated School, Chungnam National University.) | |
| A | See entire document. | 1-8 |

INTERNATIONAL SEARCH REPORT
Information on patent family members

International application No.

**PCT/KR2022/013688**

| Patent document cited in search report | | | Publication date (day/month/year) | Patent family member(s) | | | Publication date (day/month/year) |
|---|---|---|---|---|---|---|---|
| KR | 10-0159678 | B1 | 16 November 1998 | KR | 97-0032408 | A | 22 July 1997 |
| KR | 10-2019-0141729 | A | 24 December 2019 | CN | 107410988 | A | 01 December 2017 |
| | | | | CN | 107410988 | B | 27 December 2019 |
| | | | | KR | 10-2380536 | B1 | 29 March 2022 |
| | | | | WO | 2018-205264 | A1 | 15 November 2018 |

Form PCT/ISA/210 (patent family annex) (July 2022)